# DEMANDE DE BREVET EUROPEEN

(11) **EP 0 916 936 A1**
(43) Date de publication de la demande: **19.05.1999**
(21) Numéro de dépôt: 98420202.8
(22) Date de dépôt: 13.11.1998
(51) Int. Cl.: G01N 21/31, G01N 21/03

(54) **Dispositif pour l'analyse automatique multiparamètres d'une solution aqueuse**

(30) Priorité: 14.11.1997 FR 9714527
(71) Demandeur: Lac Instruments SA, 30100 Ales (FR)
(72) Inventeur: Baudet, Jacques, 30000 Nîmes (FR); Corbasson, Gérard, 42570 Saint Heand (FR); Florin, Francis, 73100 Tresserve (FR)
(74) Mandataire: Vuillermoz, Bruno

(57) **Abrégé**

Ce dispositif pour l'analyse automatique multiparamètres d'une solution aqueuse met en oeuvre la détermination de l'indice d'extinction de ladite solution par la mesure de sa densité optique. Il comprend :
- une source lumineuse (1) émettant une bande de radiations lumineuses de longueurs d'onde comprises entre l'infrarouge et l'ultraviolet ;
- une cuve à faces parallèles (3), destinée à recevoir la solution aqueuse à analyser, et comprenant une zone déterminée (5), s'étendant sur toute sa largeur, exempte de la solution aqueuse à analyser, ladite zone étant également située sur le trajet optique de la source lumineuse ;
- un polychromateur (8) au niveau duquel est acheminée une partie au moins des radiations lumineuses émises par la source (1) après traversée de la cuve (3), ledit polychromateur étant destiné à décomposer le spectre d'absorption correspondant à l'absorbance desdites radiations par la solution à analyser en une suite de signaux de variation discrète de longueurs d'onde, ledit polychromateur étant associé à un organe de traitement susceptible de déterminer, en fonction des signaux transmis par le polychromateur, la composition chimique de la solution aqueuse analysée, ainsi que la concentration de ses constituants respectifs.

## Description

L'invention concerne un nouveau dispositif destiné à réaliser l'analyse automatique multiparamètres d'une solution aqueuse, notamment par voie optronique.

Plus spécifiquement, ce dispositif est destiné à permettre la mesure d'une telle solution aqueuse de manière continue, afin notamment d'aboutir à sa composition pour en connaître en permanence les constituants et leur concentration respective.

L'obtention d'une analyse instantanée ou sur site de solutions aqueuses, notamment de manière continue, est un objectif tout particulièrement recherché pour un grand nombre d'applications et de domaines techniques, plus particulièrement dans ceux de l'environnement et du retraitement des eaux usées. Pour aboutir à un tel résultat, l'utilisation de réactifs ou la mise en oeuvre de traitements physiques et/ou chimiques préalables est donc exclue.

Le dispositif d'analyse conforme à la présente invention repose sur la mesure d'un indice complexe obtenu après transmission d'une radiation lumineuse au travers de ladite solution. L'analyse de cet indice permet d'accéder à la connaissance de son indice d'extinction, cet indice d'extinction étant lui-même caractérisé par la densité optique, également appelée absorbance.

La décomposition de la réponse spectrale obtenue après traversée de la solution par ladite radiation lumineuse incidente permet d'aboutir à la détermination des constituants de la solution aqueuse analysée mais également à leurs concentrations respectives.

Si le principe de l'analyse optronique est connu en soi, en revanche, les instruments et autres dispositifs la mettant en oeuvre nécessitent la présence d'éléments additionnels, destinés notamment à intégrer dans la solution analysée un liquide de composition et de caractéristiques physico-chimiques connues, pour diluer ladite solution avant de la soumettre à la mesure, ou encore destinés à nettoyer l'organe au sein duquel est contenue la solution à analyser.

On conçoit de fait l'inconvénient majeur de ce dispositif dans la mesure où il implique la rupture de la continuité dans la chaîne d'analyse, et la difficulté à effectuer une telle analyse sur site.

Par ailleurs, ces dispositifs présentent une capacité de mesure selon un registre spectral limité et, en outre, le niveau des corrections des instruments optiques mis en oeuvre pour ces applications s'en trouve de fait également limité.

Le dispositif pour l'analyse automatique multiparamètres conforme à l'invention, met en oeuvre, ainsi que déjà dit, la détermination de l'indice d'extinction de ladite solution par la mesure de sa densité optique.

Il comprend :
- une source lumineuse collimatée émettant une bande de radiations lumineuses de longueurs d'onde comprises entre l'infrarouge et l'ultraviolet ;
- une cuve à faces parallèles, destinée à recevoir une solution aqueuse à analyser, dont les faces parallèles sont positionnées sur le trajet optique de la source lumineuse collimatée ;
- un polychromateur au niveau duquel est acheminée une partie au moins des radiations lumineuses émises par la source après traversée de la cuve, ledit polychromateur étant destiné à décomposer le spectre d'absorption correspondant à l'absorbance desdites radiations par la solution à analyser en une suite de signaux de variation discrète de longueurs d'onde, ledit polychromateur étant associé à un organe de traitement susceptible de déterminer, en fonction des signaux transmis par le polychromateur, la composition chimique de la solution aqueuse analysée, ainsi que la concentration de ses constituants respectifs.

Ce dispositif se caractérise en ce que la cuve à faces parallèles comprend une zone déterminée, s'étendant sur toute sa largeur, exempte de la solution aqueuse à analyser, ladite zone étant également située sur le trajet optique de la source lumineuse.

Cette zone exempte de toute solution aqueuse est ainsi isolée du liquide à analyser, celui-ci étant éventuellement en circulation, soit par la présence d'une pièce optique cylindrique, transparente aux rayonnements émis par la source, et reliant les deux faces de la cuve, soit par la présence d'un tube contenant de l'air ou un liquide connu, afin de servir de référence pour la mesure de l'absorbance, sans qu'il soit nécessaire d'effectuer un rinçage de la cuve, et sans être gêné par un éventuel dépôt de buée.

De la sorte, cette mesure de référence permet de tenir compte des évolutions possibles des performances de la source et du récepteur polychromateur en fonction des conditions d'environnement ou de leur durée de vie.

Bien entendu, les fenêtres constitutives des faces parallèles de la cuve sont des lames transparentes au rayonnement émis par la source.

Ainsi que déjà dit, cette source lumineuse est collimatée, c'est à dire que le présentateur au niveau duquel est reçue la solution aqueuse à analyser est placé dans un espace optique afocal, compris entre deux éléments optiques, l'un amont de collimation, et l'autre aval de focalisation, ces éléments étant corrigés des aberrations sphérochromatiques dans l'étendue du spectre de lumière produit par la source.

Selon une autre caractéristique de l'invention, la cuve est munie d'un organe de nettoyage composé d'un générateur d'ultrasons, propre à maintenir au sein de la cuve un niveau de propreté requis pour une mesure en continu.

Selon une autre caractéristique de l'invention, il est adjoint au dispositif un organe de réglage de la quantité de flux lumineux atteignant la fente d'entrée du polychromateur. Cet organe de réglage est constitué d'une pluralité de filtres optiques, propres à permettre une gamme de sélection allant de l'extinction totale de la lumière jusqu'au niveau de lumière maximum, ce système de filtres étant placé de manière préférentielle dans la zone afocale du dispositif.

Ces filtres sont avantageusement montés sur la périphérie d'une roue dont l'axe de rotation est sensiblement parallèle à l'axe optique du dispositif.

La manière dont l'invention peut être réalisée et les avantages qui en découlent ressortiront mieux des exemples de réalisation qui suivent donnés à titre indicatif et non limitatif à l'appui des figures annexées.

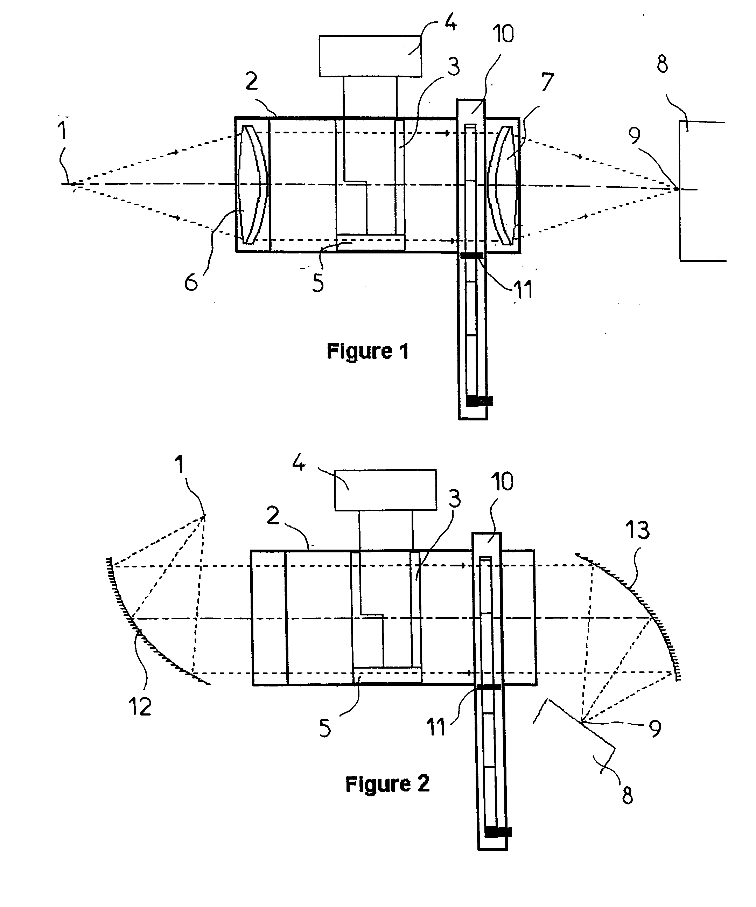

La figure 1 est une représentation schématique du dispositif conforme à l'invention, et plus particulièrement du trajet optique du rayonnement mis en oeuvre, dont la figure 2 est une variante.

Selon l'invention, le dispositif comporte tout d'abord une source lumineuse (1) simple ou composite, intermittente ou continue, susceptible d'émettre un rayonnement de longueurs d'onde comprises par exemple entre 200 et 800 nanomètres, c'est à dire permettant de mettre en évidence la transmission de la solution aqueuse à analyser dans les spectres ultraviolet, visibles et proches infrarouge.

Le rayonnement émis à partir de cette source (1) est collimaté au moyen d'un groupe optique dioptrique, par exemple constitué par un doublet corrigé des aberrations sphérochromatiques (6), de telle sorte à émettre un rayonnement parallèle au niveau d'un présentateur (2), destiné notamment à recevoir la cuve d'analyse (3).

Par ailleurs, à l'issue de la cuve (3), c'est à dire en fin du présentateur (2), le rayonnement parallèle est focalisé, au moyen d'un groupe optique dioptrique (7), par exemple constitué par un doublet corrigé des aberrations sphérochromatiques, au niveau de la fente d'entrée (9) d'un polychromateur (8) décrit plus en détail ci-après.

Les groupes optiques (6) et (7) doivent être suffisamment corrigés du sphérochromatisme pour permettre de les éloigner l'un de l'autre, et de pouvoir ainsi introduire dans l'espace laissé libre d'autres cuves de mesure, destinées par exemple à des préparations réalisées en dehors de l'instrument.

C'est ainsi que dans le même but, les groupes optiques (6) et (7) sont supprimés du présentateur (2), l'espace afocal étant réalisé au moyen de miroirs, par nature achromatiques, dont la disposition respective est favorable à la réduction des aberrations géométriques. Ces miroirs peuvent être de type sphérique ou asphérique, catoptrique ou catadioptrique sans pour autant changer la nature de l'invention. On a représenté au sein de la figure 2 cette forme de réalisation.

La cuve (3) à faces parallèles présente des épaisseurs multiples, de dimension parfaitement connue, ainsi qu'on peut bien l'observer sur la figure (1). Les fenêtres sont des lames transparentes au rayonnement émis par la source (1).

Selon une caractéristique fondamentale de l'invention, cette cuve (3) est munie d'une zone (5) isolée du liquide à analyser en circulation. Cet isolement est rendu possible par la présence d'une pièce optique cylindrique transparente aux rayonnements du spectre analysé ou, par la mise en place au niveau de cette zone d'un cuve contenant de l'air ou un liquide connu, de telle sorte à servir de référence pour la mesure sans qu'il soit nécessaire d'effectuer un rinçage de la cuve et sans être gêné par un éventuel dépôt de buée au niveau de ses parois.

Cette mesure de référence permet de tenir compte des évolutions possibles des performances de la source et/ou du récepteur, en fonction des conditions d'environnement notamment.

L'ensemble opto-mécanique ainsi réalisé est avantageusement inclus dans un bloc métallique solidaire des éléments qui le précèdent ou lui succèdent dans la chaîne optique.

Selon une caractéristique de l'invention, cet ensemble est associé à un générateur d'ultrasons (4), en application d'un procédé connu dans le domaine optique pour nettoyer les faces des éléments transmettant la lumière. Les ondes ultra-sonores produites, dont la fréquence et la puissance sont adaptées à la masse soumise à leur action, permettent en effet par leur effet physico-chimique, d'obtenir que les faces de la cuve (3) à circulation de liquide à analyser soient toujours propres, libérées des polluants que ledit liquide est susceptible de transporter, et dont des traces peuvent être retenues sur les faces de la cuve.

Selon une autre caractéristique de l'invention, le dispositif comprend un jeu de filtres optiques monté sur une roue (10) à axe de rotation (11) parallèle à l'axe optique dudit dispositif.

Ces filtres permettent de faire varier la quantité de flux lumineux reçue par le polychromateur, et ce graduellement de l'extinction totale jusqu'au niveau de lumière maximum, et permet ainsi de régler le niveau du signal produit par la barrette de photodiodes contenue au sein du polychromateur (8).

Ainsi que représenté sur la figure 1, ce jeu de filtres optiques est placé dans l'espace afocal du dispositif.

Avantageusement, la roue (10) comporte également des diaphragmes, de sorte que par la rotation de la roue, on peut outre sélectionner le filtre correspondant au niveau d'énergie souhaité pour le récepteur, également la zone de la cuve dont l'épaisseur convient à la concentration des composants à détecter dans la solution ou encore, la zone (5) réservée à la mesure de la référence, c'est à dire correspondant à la zone exempte de toute solution à analyser.

Cette roue est avantageusement munie d'un moteur électrique associé à un organe de traitement (non représenté), propre à assurer sa rotation en fonction des besoins.

Le polychromateur (8) est constitué par exemple par un réseau, destiné à diffracter les ondes électromagnétiques qui lui parviennent selon une pluralité de faisceaux monochromatiques de longueur d'onde fonction de l'angle de diffraction. Il comprend également un récepteur, par exemple constitué par une barrette de photodiodes, destiné de manière connue à transformer les signaux électromagnétiques reçus en signaux analogiques représentatifs de l'intensité lumineuse des signaux électromagnétiques, eux-mêmes directement liés à l'absorbance de la solution analysée pour la longueur d'onde incidente déterminée.

Ce polychromateur est associé à un organe de traitement, typiquement constitué d'un micro-ordinateur, comportant une mémoire associée.

Un traitement numérique approprié effectué au niveau dudit organe de traitement compare les valeurs d'absorbance mesurées pour ladite longueur d'onde déterminée avec celles d'un fichier contenu dans la mémoire associée intégrant les valeurs d'absorptivité des constituants à doser.

Ce calcul conduit tout d'abord à la nature des constituants contenus dans la solution analysée, et ensuite à une valeur précise de leur concentration.

On conçoit tout l'intérêt d'un tel dispositif dans la mesure où il permet une analyse sur site, et en continu, de la nature chimique et de la concentration respective des entités contenues au sein d'une solution aqueuse.

Par ailleurs, par l'adjonction d'un système de nettoyage de la cuve d'analyse par le biais d'un générateur à ultrasons, on se prémunit des inconvénients rédhibitoires inhérents à l'encrassement des fenêtres d'analyse des dispositifs traditionnels. Enfin, de par la présence d'une zone exempte de toute solution analysée, on dispose en permanence d'un signal de référence augmentant la qualité et la précision de la mesure, tout en réduisant considérablement la durée des analyses.

## Revendications

1. Dispositif pour l'analyse automatique multiparamètres d'une solution aqueuse mettant en oeuvre la détermination de l'indice d'extinction de ladite solution par la mesure de sa densité optique, comprenant :
• une source lumineuse collimatée (1) émettant une bande de radiations lumineuses de longueurs d'onde comprises entre l'infrarouge et l'ultraviolet ;
• une cuve à faces parallèles (3), destinée à recevoir la solution aqueuse à analyser, dont les faces parallèles sont positionnées sur le trajet optique de la source lumineuse collimatée ;
• un polychromateur (8) au niveau duquel est acheminée une partie au moins des radiations lumineuses émises par la source (1) après traversée de la cuve (3), ledit polychromateur étant destiné à décomposer le spectre d'absorption correspondant à l'absorbance desdites radiations par la solution à analyser en une suite de signaux de variation discrète de longueurs d'onde, ledit polychromateur étant associé à un organe de traitement susceptible de déterminer, en fonction des signaux transmis par le polychromateur, la composition chimique de la solution aqueuse analysée, ainsi que la concentration de ses constituants respectifs ;
***caractérisé*** en ce que la cuve à faces parallèles (3) comprend une zone déterminée (5), s'étendant sur toute sa largeur, exempte de la solution aqueuse à analyser, ladite zone étant également située sur le trajet optique de la source lumineuse.

2. Dispositif pour l'analyse automatique multiparamètres d'une solution aqueuse selon la revendication 1, ***caractérisé*** en ce que la zone (5) exempte de la solution aqueuse à analyser est définie par un tube mis en place au sein de la cuve (3), et contenant de l'air ou un liquide connu, de telle sorte à servir de référence pour la mesure de l'absorbance.

3. Dispositif pour l'analyse automatique multiparamètres d'une solution aqueuse selon l'une des revendications 1 et 2, ***caractérisé*** en ce que la cuve (3) est une cuve à circulation, dans laquelle la solution à analyser est susceptible de se déplacer en permanence.

4. Dispositif pour l'analyse automatique multiparamètres d'une solution aqueuse selon l'une des revendications 1 à 3, ***caractérisé*** en ce que la cuve (3) est reçue au sein d'un présentateur (2), lui-même situé dans un espace afocal par rapport à la source (1).

5. Dispositif pour l'analyse automatique multiparamètres d'une solution aqueuse selon la revendication 4, ***caractérisé*** en ce que l'espace afocal est défini au moyen de groupes optiques (6, 7), corrigés des aberrations sphérochromatiques.

6. Dispositif pour l'analyse automatique multiparamètres d'une solution aqueuse selon la revendication 4, ***caractérisé*** en ce que l'espace afocal est défini par deux miroirs (12, 13), sphériques ou asphériques.

7. Dispositif pour l'analyse automatique multiparamètres d'une solution aqueuse selon l'une des revendications 1 à 6, ***caractérisé*** en ce que la cuve (3) est munie d'un organe de nettoyage composé d'un générateur d'ultrasons (4), propre à maintenir au sein de la cuve un niveau de propreté requis pour une mesure en continu.

8. Dispositif pour l'analyse automatique multiparamètres d'une solution aqueuse selon l'une des revendications 1 à 7, ***caractérisé*** en ce qu'il comprend un organe de réglage (10, 11) de la quantité de flux lumineux atteignant la fente d'entrée (9) du polychromateur (8).

9. Dispositif pour l'analyse automatique multiparamètres d'une solution aqueuse selon la revendication 8, ***caractérisé*** en ce que l'organe de réglage (10, 11) est constitué d'une pluralité de filtres optiques, propres à permettre une gamme de sélection allant de l'extinction totale de la lumière jusqu'au niveau de lumière maximum, lesdits filtres étant avantageusement positionnés dans l'espace afocal du dispositif.

10. Dispositif pour l'analyse automatique multiparamètres d'une solution aqueuse selon l'une des revendications 8 et 9, ***caractérisé*** en ce que les filtres sont montés sur la périphérie d'une roue (10), dont l'axe de rotation (11) est sensiblement parallèle à l'axe optique du dispositif.

11. Dispositif pour l'analyse automatique multiparamètres d'une solution aqueuse selon la revendication 10, ***caractérisé*** en ce que la roue (10) comporte également des diaphragmes, de sorte que de par la rotation de la roue, il peut être sélectionné, outre le filtre correspondant au niveau d'énergie souhaité pour le récepteur, également la zone de la cuve (3) dont l'épaisseur convient à la concentration des composants à détecter dans la solution ou encore, la zone (5) réservée à la mesure de la référence, c'est à dire correspondant à la zone exempte de toute solution à analyser.
